# EUROPÄISCHE PATENTSCHRIFT

(11) **EP 3 926 222 B1**
(45) Veröffentlichungstag und Bekanntmachung des Hinweises auf die Patenterteilung: **22.01.2025**
(21) Anmeldenummer: 21178599.3
(22) Anmeldetag: 09.06.2021
(51) Int. Cl.: F16L 9/12, F16L 9/147, H05F 1/00, H05F 3/02, H05F 3/00

(54) **ROHRLEITUNG ZUR FÖRDERUNG VON FLUIDEN ODER FESTSTOFFEN**
PIPELINE FOR CONVEYING FLUIDS OR SOLIDS
CONDUITE DE TRANSPORT DE LIQUIDES OU DE SOLIDES

(30) Priorität: 19.06.2020 DE 102020116217
(43) Veröffentlichungstag der Anmeldung: 22.12.2021
(73) Patentinhaber: Fr. Jacob Söhne GmbH & Co. KG, 32457 Porta Westfalica (DE)
(72) Erfinder:
(74) Vertreter: Dantz, Jan Henning

(56) Entgegenhaltungen:
- CN-U- 203 131 241
- DE-U1- 202014 105 867
- US-A- 5 916 945
- GMBI: "TRSG 727:2016. Technische Regeln für Gefahrstoffe - Vermeidung von Zündgefahren infolge elektrostatischer Aufladungen", 31 January 2016 (2016-01-31), pages 1 - 118, XP055859371, Retrieved from the Internet <URL:https://www.asecos.com/dokumente/TRGS-727-Vermeidung-von-Zuendgefahren-infolge-elektrostatischer-Aufladungen.pdf> [retrieved on 20211109]
- "Explosive atmospheres - Part 32-1: Electrostatic hazards, guidance", 20 August 2013 (2013-08-20), pages 1 - 364, XP082024024, Retrieved from the Internet <URL:https://api.iec.ch/harmonized/publications/download/295916> [retrieved on 20130820]
- "Amendment 1 - Explosive atmospheres - Part 32-1: Electrostatic hazards, guidance", IEC TS 60079-32-1:2013/AMD1:2017, IEC, 3, RUE DE VAREMBÉ, PO BOX 131, CH-1211 GENEVA 20, SWITZERLAND, 16 March 2017 (2017-03-16), pages 1 - 6, XP082011420
- "DIN 54345-1:1992-02. Pruefung von Textilien; Elektrostatisches Verhalten; Bestimmung elektrischer Widerstandsgroeßen", 1 February 1992 (1992-02-01), XP009553853, Retrieved from the Internet <URL:https://www.dinmedia.de/de/norm/din-54345-1/1813389>

## Beschreibung

Die vorliegende Erfindung betrifft eine Rohrleitung nach dem Oberbegriff des Anspruchs 1 zur Förderung von Fluiden oder Feststoffen, mit einem metallischen Rohr, an dem an einer inneren Wand eine rohrförmige Auskleidung aus Kunststoff angeordnet ist.

CN 203 131 241 U zeigt eine antistatisch ausgebildete, anti-korrosive Rohrleitung aus Stahl, die eine Innenauskleidung aus Fluorkunstoff Graphit aufweist. Ähnlich zeigt US 5 916 945 A eine antistatische Auskleidung für Rohrleitungen. Diese Rohrleitungen sind für Flüssigkeiten, beziehungsweise Gas bestimmt und für abrasive Schüttgüter ungeeignet.

Die DE 100 24 738 A1 offenbart eine Rohrleitung, bei der ein rohrförmiger Glaskörper mit einem ableitfähigen Polymer beschichtet ist, um den Oberflächenwiderstand zu reduzieren. Mehrere Rohrleitungsstücke können dabei über Dichtmittel zu einer Leitung zusammengefügt werden. Der Einsatz von glasförmigen Rohrkörpern lässt sich meist nur für kleine Rohrleitungsquerschnitte einsetzen. Zudem ist ein solches Rohr zur Förderung von abrasiven Schüttgütern schlecht geeignet, da diese die dünne Beschichtung beschädigen.

Zur Förderung von Schüttgütern ist es bekannt, dass Rohrleitungen mit einer Verschleißschutzschicht aus Kunststoff ausgestattet werden. Beispielsweise offenbart DE 20 2014 105867 U1 ein einem Metallrohr liegendes, mit diesem verschraubtes Rohr aus Kunststoff als Innenauskleidung. Dadurch kann ein abrasives Material, wie Sand, Kies oder Getreide, durch die Rohrleitung gefördert werden, wobei solche Rohrleitungen auch mit größerem Querschnitt hergestellt werden können. Bei diesen Rohrleitungen ist allerdings nachteilig, dass es bei einer reibungsbehafteten Strömung zu einer elektrostatischen Aufladung kommen kann, die sowohl das Schüttgut als auch die Rohrleitung erfasst. Eine plötzliche Entladung kann zu einer Zündgefahr des Schüttgutes und der Rohrumgebung führen.

TRGS 727:2016 offenbart technische Regeln für Gefahrstoffe zur Vermeidung von Zündgefahren infolge elektrostatischer Aufladungen.

Es ist daher Aufgabe der vorliegenden Erfindung, eine Rohrleitung zur Förderung von Fluiden oder Feststoffen zu schaffen, die auch abrasive Materialien fördern kann, wobei die Gefahr einer Zündung durch elektrostatische Aufladung reduziert ist.

Diese Aufgabe wird mit einer Rohrleitung zur Förderung von Fluiden oder Feststoffen mit den Merkmalen des Anspruches 1 gelöst.

Die erfindungsgemäße Rohrleitung umfasst ein metallisches Rohr, an dem an einer inneren Wand eine rohrförmige Auskleidung aus Kunststoff angeordnet ist, wobei der Wandaufbau mit der Auskleidung aus Kunststoff und dem metallischen Rohr ableitfähig ausgebildet ist, und der Durchgangswiderstand R_{V} der Rohrleitung ist nach DIN 54345-1:1992 bei einer Messspannung von 1.000 V gemäß IEC 60079-32-2:2015 zwischen 0,5 ×10⁷ Ω und 15 ×10⁷ Ω aufweist. Dadurch kann die Zündgefahr bei einer reibungsbehafteten Strömung in der Rohrleitung durch elektrostatische Aufladung reduziert werden, da die Aufladung über den Wandaufbau abgeleitet werden kann. Der Wandaufbau bietet auch gegenüber abrasiven Materialien einen hohen Verschließschutz durch die Auskleidung aus Kunststoff. Ein elektrostatisch aufgeladenes Schüttgut oder ein Fluid kann bei Durchleitung durch die Rohrleitung zuverlässig entladen werden.

In der vorliegenden Anmeldung bedeutet "ableitfähig" die Beschreibung der elektrostatischen Eigenschaften bzw. Aufladbarkeit nach TRGS 727:2016 für feste Materialien, Gegenstände und Einrichtungen. Diese Eigenschaft wird in leitfähig, ableitfähig und isolierend eingeteilt (TRGS 727:2016 Anhang I). Damit die Rohrleitung mit dem metallischen Rohr und der rohrförmigen Auskleidung aus Kunststoff als ableitfähig eingestuft werden kann, müssen alle Einzelwiderstände mindestens im ableitfähigen Bereich liegen.

Eine Rohrleitung im Sinne der vorliegenden Anmeldung kann sowohl linear als auch gebogen verlaufen oder Abzweigungen enthalten. Die genaue Form der Rohrleitung kann sowohl in Längsrichtung als auch im Querschnitt an den jeweiligen Einsatzzweck angepasst werden, wobei die Querschnittsform bevorzugt kreisförmig ist.

Die Rohrleitung entspricht den Anforderungen an ableitfähige Materialien im Sinne der IEC/TS 60079-32-1:2013+AMD1:2017 sowie TRGS 727:2016. Die Rohrleitung ist daher zum Transport von brennbaren Flüssigkeiten, brennbaren Gasen und pneumatisch geförderten brennbaren Stäuben geeignet, da die ableitfähigen Rohrleitungen dauerhaft in den Potentialausgleich eingebunden werden können. Dadurch entfällt auch eine Einschränkung für die Schüttgutförderung mittels Schwerkraft.

Die Auskleidung umfasst als Kunststoff vorzugsweise Polyurethan. Dieses Material besitzt eine hohe Widerstandsfähigkeit gegenüber Verschleiß und besitzt eine ausreichende Elastizität zur Kompensation von Wärmespannungen oder anderen Verformungen. Die Härte der Auskleidung kann beispielsweise zwischen 80 bis 86 Shore A betragen. Der Abriebverlust der Auskleidung nach DIN 53516 beträgt vorzugsweise zwischen 35 und 50 mm³, insbesondere 40 und 46 mm³.

Die Auskleidung ist vorzugsweise über mechanische Befestigungsmittel aus Metall an dem metallischen Rohr festgelegt. Als Befestigungsmittel können Schrauben, Muttern, Nieten und/oder andere metallische Befestigungsmittel eingesetzt werden. Vorzugsweise werden bei einer Oberfläche von 1 m² mindestens 5 Befestigungsmittel eingesetzt, um eine ausreichende Ableitfähigkeit bereitzustellen. Zusätzlich oder alternativ kann die Auskleidung auch mit dem metallischen Rohr verklebt sein, wobei das Klebemittel vorzugsweise leitfähig ausgebildet ist und einen metallischen Anteil enthält, beispielsweise Silber.

Statt dem Verkleben oder die Fixierung über mechanische Befestigungsmittel können Spannkräfte oder Haltekräfte dadurch erzeugt werden, dass die Auskleidung mit Überlänge in das metallische Rohr geschoben wird und die beiden Seiten gegeneinander gedrückt werden. Eine weitere Methode zur Befestigung sind Druckspannungen, ausgehend vom Auskleidungsmaterial. Dieses wirkt mit einer bestimmten Kraft auf die gekrümmte Rohrinnenfläche, sodass das Auskleidungmaterial klemmend im Rohr gehalten wird.

Der Anpressdruck der Auskleidung an dem metallischen Rohr kann beispielsweise so gewählt werden, dass an allen Messpunkten eine Anpresskraft zwischen 200N bis 400N vorhanden ist. Zur Messung des Anpressdruckes der Auskleidung kann eine Bohrung in den Mantel des Rohrs eingebracht werden, damit an dem Mantel an jeder Bohrung ein Kraftsensoren vorgesehen werden kann. Die Bohrungen werden gleichmäßig axial und radial im Mantel verteilt. Danach wird der Mantel zum Rohr verschweißt. Die Auskleidung wird mit einer Überlänge geschnitten, sodass eine Kraft im Bereich von vorzugsweise 200 bis 400 N an allen Messpunkten verzeichnet werden kann.

Der spezifische Oberflächenwiderstand der Auskleidung ist bei Messung mit einer Ringelektrode nach EN ISO 284:2004 bei einer Messspannung von 1.000 V gemäß IEC 60079-32-2:2015 in einem Bereich zwischen 3 ×10⁷ Ω bis 90 ×10⁷ Ω, insbesondere 1 × 10⁸ Ω bis 9 × 10⁸ Ω.

In der Auskleidung ist in einer bevorzugten Ausführungsform eine Einlage aus Metall angeordnet. Eine solche Einlage kann beispielsweise als metallisches Streckgitter ausgebildet sein. Die Auskleidung kann auch ohne metallische Einlage ausgebildet sein.

Das metallische Rohr ist vorzugsweise aus Stahl, insbesondere einem Edelstahl hergestellt, wie Chromnickelstahl, der optional beschichtet sein kann.

Der Durchmesser des metallischen Rohrs beträgt zwischen 80 mm und 1000 mm, insbesondere zwischen 100 mm und 400 mm.

Die Erfindung wird nachfolgend anhand eines Ausführungsbeispiels mit Bezug auf die beigefügten Zeichnungen näher erläutert. Es zeigen:
- Figur 1: einen Schnitt durch eine erfindungsgemäße Rohrleitung, und
- Figur 2: eine Detailansicht der Rohrleitung der Figur 1.

Eine Rohrleitung 1 umfasst ein metallisches Rohr 2, in dem eine innere rohrförmige Auskleidung 3 aus Kunststoff angeordnet ist. Die Auskleidung 3 ist in das metallische Rohr 2 eingeschoben und über ein metallisches Befestigungsmittel 4, beispielsweise eine Schraube, an einer inneren Wand des Rohres klemmend fixiert. Über den Umfang verteilt können mehrere Befestigungsmittel 4 vorgesehen sein.

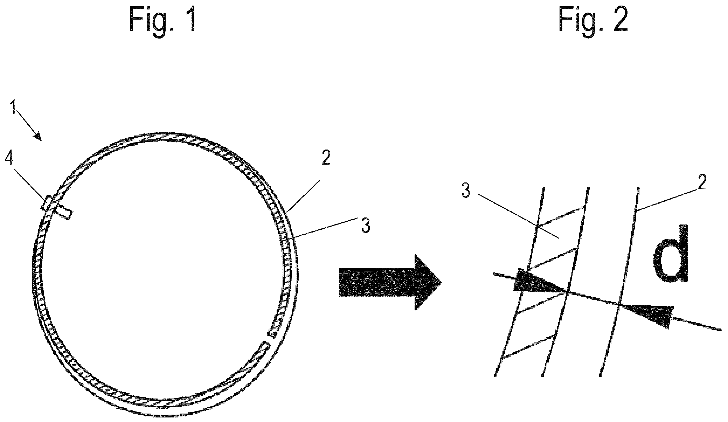

In Figur 2 ist die Auskleidung 3 und das Rohr 2 im Detail dargestellt, die ohne Befestigungsmittel beabstandet voneinander angeordnet sind und zwischen denen ein Spalt (d) ausgebildet ist, der einen Kondensator ausbilden kann. Zur Vermeidung solcher Spalte liegt die Auskleidung 3 vorzugsweise klemmend an der inneren Wand des metallischen Rohrs 2 an. Alternativ oder zusätzlich kann die Auskleidung 3 auch ohne Befestigungsmittel 4 klemmend an dem metallischen Rohr 2 anliegen oder mit dem metallischen Rohr 2 verklebt sein, insbesondere über ein leitfähiges Klebemittel.

Die Rohrleitung 1 mit dem Wandaufbau aus Auskleidung 3 und metallischem Rohr 2 ist erfindungsgemäß ableitfähig ausgebildet, wobei der spezifische Durchgangswiderstand R_{V} der so gebildeten Rohrleitung 1 kleiner 10⁸ Ωm ist.

Hierfür kann die Auskleidung aus Kunststoff Polyurethan umfassen oder aus Polyurethan hergestellt sein und einen spezifischen Oberflächenwiderstand kleiner 8×10⁸ Ωm aufweisen. Optional kann in der Auskleidung auch eine metallische Einlage, wie ein Streckgitter, angeordnet sein. Für eine höhere Elastizität kann auf eine solche Einlage aber auch verzichtet werden.

Durch die Rohrleitung 1 werden vorzugsweise Schüttgüter gefördert, beispielsweise Sand, Kies, Getreide, Soja, Mais oder Mehl, die beim Fördern eine hohe abrasive Wirkung besitzen, wobei das metallische Rohr 2 durch die innere Auskleidung aus Kunststoff geschützt ist. Das metallische Rohr 2 kann einen Durchmesser zwischen 80 und 1000 mm, insbesondere 150 und 350 mm, aufweisen, wobei die Dicke des metallischen Rohres 2 beispielsweise 1mm bis 3mm und die Dicke der Auskleidung beispielsweise zwischen 3 mm bis 12 mm, insbesondere 5 mm bis 10 mm, beträgt.

Zur Herstellung der Auskleidung wird ein vorzugsweise plattenförmiges Material zurechtgeschnitten und dann zu einem rohrförmigen Körper verformt, der dann in das äußere metallische Rohr 2 eingeschoben wird. Anschließend wird die Auskleidung 3 an dem metallischen Rohr 2 über Befestigungsmittel 4 und/oder Klebemittel fixiert.

Zur Messung der elektrostatischen Aufladbarkeit wurde ein metallisches Rohr aus Edelstahl mit einem Durchmesser von 200mm und einer Wandstärke von 2mm mit einer Auskleidung aus Kunststoff innen verkleidet, die über Befestigungsmittel in Form von Schrauben an dem metallischen Rohr festgelegt wurde. Das so erstellte Prüfmuster wurde bei einer relativen Luftfeuchte von 25 bis 30% und einer Temperatur von 23°C untersucht.

An der Auskleidung wurde eine Streifenelektrode mit einem Längen- / Abstandsverhältnis von 10:1 bei einer Messspannung von 1000V gemäß IEC 60079-32-2:2015 angeordnet, um Messungen durchzuführen, um den spezifischen Durchgangswiderstand zu bestimmen. Der spezifische Durchgangswiderstand wird aus dem gemessenen Durchgangswiderstand, der wirksamen Elektrodenfläche der Streifenelektrode und der Materialstärke berechnet.

Der spezifische Durchgangswiderstand R_{V} lag bei verschiedenen Mustern zwischen 1,5 × 10⁶ Ωm und 2,8 × 10⁶ Ωm, insbesondere 2,0 × 10⁶ Ωm und 2,3 × 10⁶ Ωm. Das Produkt aus Durchgangswiderstand R_{V} und der Elektrodenfläche lag bei 0,9 bis 1,8 × 10⁴ Ωm² insbesondere 1,1 10⁴ Ωm² bis 1,6 × 10⁴ Ωm².

Dadurch lässt sich die ausgekleidete Rohrleitung auch zum Fördern von brennbaren Stäuben, brennbaren Flüssigkeiten und Gasen verwenden.

### Bezugszeichenliste

- 1: Rohrleitung
- 2: Rohr
- 3: Auskleidung
- 4: Befestigungsmittel
- d: Spalt

## Patentansprüche

1. Rohrleitung (1) zur Förderung von Fluiden oder Feststoffen, mit einem metallischen Rohr (2), an dem an einer inneren Wand eine rohrförmige Auskleidung (3) aus Kunststoff angeordnet ist, wobei der Wandaufbau mit der Auskleidung (3) und dem metallischen Rohr (2) elektrisch ableitfähig ausgebildet ist und, **dadurch gekennzeichnet, dass** die Auskleidung (3) einen Durchgangswiderstand Rᵥ nach DIN 54345-1:1992 bei einer Messspannung von 1.000 V gemäß IEC 60079-32-2:2015 zwischen 0,5 ×10⁷ Ω und 15 ×10⁷ Ω aufweist.

2. Rohrleitung nach Anspruch 1, **dadurch gekennzeichnet, dass** die Auskleidung (3) aus Kunststoff ein Polyurethan, ein Polyester und/oder Diphenylmethan umfasst.

3. Rohrleitung nach einem der vorhergehenden Ansprüche, **dadurch gekennzeichnet, dass** die Auskleidung (3) über mechanische Befestigungsmittel (4) aus Metall an dem metallischen Rohr (2) festgelegt ist.

4. Rohrleitung nach einem der vorhergehenden Ansprüche, **dadurch gekennzeichnet, dass** die Auskleidung (3) mit dem metallischen Rohr (2) verklebt ist.

5. Rohrleitung nach einem der vorhergehenden Ansprüche 1, 2 oder 4, **dadurch gekennzeichnet, dass** die Auskleidung (3) ohne mechanische Befestigungsmittel klemmend in dem metallischen Rohr (2) gehalten ist.

6. Rohrleitung nach einem der vorhergehenden Ansprüche, **dadurch gekennzeichnet, dass** die Anpresskraft der Auskleidung (3) an dem metallischen Rohr (2) an allen Messpunkten zwischen 200N und 400N beträgt.

7. Rohrleitung nach einem der vorhergehenden Ansprüche, **dadurch gekennzeichnet, dass** die Auskleidung einen mit einer Ringelektrode nach EN ISO 284:2004 bei einer Messspannung von 1.000 V gemäß IEC 60079.-32-2:2015 gemessen Oberflächenwiderstand in einem Bereich zwischen 3 ×10⁷ Ω bis 90 ×10⁷ Ω, insbesondere 1 × 10⁸ Ω bis 9 × 10⁸ Ω aufweist.

8. Rohrleitung nach einem der vorhergehenden Ansprüche, **dadurch gekennzeichnet, dass** die Auskleidung (3) eine Dicke in radiale Richtung zwischen 3 mm und 10 mm, insbesondere 5 mm und 8 mm aufweist.

9. Rohrleitung nach einem der vorhergehenden Ansprüche, **dadurch gekennzeichnet, dass** in der Auskleidung (3) eine Einlage aus Metall angeordnet ist.

10. Rohrleitung nach Anspruch 9, **dadurch gekennzeichnet, dass** die Einlage als Streckgitter ausgebildet ist.

11. Rohrleitung nach einem der vorhergehenden Ansprüche, **dadurch gekennzeichnet, dass** das metallische Rohr (2) aus Edelstahl hergestellt ist.

## Claims

1. Pipeline (1) for conveying fluids or solids, having a metallic pipe (2) on which a tubular lining (3) made of plastic is arranged on an inner wall, whereby the wall structure with the lining (3) and the metallic pipe (2) is designed to be electrically conductive and **characterized in that** the lining (3) has a contact resistance Rᵥ according to DIN 54345-1:1992 at a measuring voltage of 1,000 V according to IEC 60079-32-2:2015 between 0.5 ×10⁷ Ω and 15 ×10⁷ Ω .

2. Pipeline according to claim 1, **characterized in that** the lining (3) of plastic comprises a polyurethane, a polyester and/or diphenylmethane.

3. Pipeline according to one of the preceding claims, **characterized in that** the lining (3) is fixed to the metallic pipe (2) by mechanical fastening means (4) made of metal.

4. Pipeline according to one of the preceding claims, **characterized in that** the lining (3) is glued to the metallic pipe (2).

5. Pipeline according to any of the preceding claims 1, 2 or 4, **characterized in that** the lining (3) is held in a clamping manner in the metallic pipe (2) without mechanical fastening means.

6. Pipeline according to one of the preceding claims, **characterized in that** the contact force of the lining (3) on the metallic pipe (2) at all measuring points is between 200N and 400N.

7. Pipeline according to one of the preceding claims, **characterized in that** the lining has a surface resistance between 3 ×10⁷ Ω and 90 ×10⁷ Ω, in particular 1 ×10⁸ Ω and 9 ×10⁸ Ω, measured with a ring electrode according to EN ISO 284:2004 at a measuring voltage of 1,000 V according to IEC 60079.-32-2:2015.

8. Pipeline according to one of the preceding claims, **characterized in that** the lining (3) has a thickness in the radial direction of between 3 mm and 10 mm, in particular 5 mm and 8 mm.

9. Pipeline according to one of the preceding claims, **characterized in that** an insert made of metal is arranged in the lining (3).

10. Pipeline according to claim 9, **characterized in that** the insert is formed as an expanded metal.

11. Pipeline according to any of the preceding claims, **characterized in that** the metallic pipe (2) is made of stainless steel.

## Revendications

1. Tuyauterie (1) pour le transport de fluides ou de solides, avec un tuyau métallique (2) sur une paroi intérieure duquel un revêtement tubulaire (3) en matériau de synthèse est disposé, dans laquelle la structure de paroi pourvue du revêtement (3) et du tuyau métallique (2) est construite pour pouvoir dériver l'électricité, **caractérisée en ce que** le revêtement (3) a une résistance de passage Rᵥ selon DIN 54345-1:1992 comprise entre 0,5 × 10⁷ Ω et 15 × 10⁷ Ω à une tension de mesure de 1000 V selon CEI 60079-32-2:2015.

2. Tuyauterie selon la revendication 1, **caractérisée en ce que** le revêtement (3) en matériau de synthèse contient un polyuréthane, un polyester et/ou un diphénylméthane.

3. Tuyauterie selon l'une des revendications précédentes, **caractérisée en ce que** le revêtement (3) est fixé sur le tuyau métallique (2) par des moyens de fixation (4) en métal.

4. Tuyauterie selon l'une des revendications précédentes, **caractérisée en ce que** le revêtement (3) est collé au tuyau métallique (2).

5. Tuyauterie selon l'une des revendications 1, 2 ou 4, **caractérisée en ce que** le revêtement (3) est retenu par serrage sur le tuyau métallique (2) sans moyens de fixation mécaniques.

6. Tuyauterie selon l'une des revendications précédentes, **caractérisée en ce que** la force de pressage du revêtement (3) sur le tuyau métallique (2) est comprise entre 200 N et 400 N en tous les points de mesure.

7. Tuyauterie selon l'une des revendications précédentes, **caractérisée en ce que** le revêtement présente une résistance de surface, mesurée avec une électrode annulaire selon EN ISO 284:2004, comprise entre 3 × 10⁷ Ω et 90 × 10⁷ Ω, en particulier entre 1 × 10⁸ Ω et 9 × 10⁸ Ω à une tension de mesure de 1000 V selon CEI 60079-32-2:2015.

8. Tuyauterie selon l'une des revendications précédentes, **caractérisée en ce que** le revêtement (3) présente une épaisseur dans le sens radial comprise entre 3 mm et 10 mm, en particulier entre 5 mm et 8 mm.

9. Tuyauterie selon l'une des revendications précédentes, **caractérisée en ce qu'**un insert en métal est disposé dans le revêtement (3).

10. Tuyauterie selon la revendication 9, **caractérisée en ce que** l'insert est conçu comme une grille en métal déployé.

11. Tuyauterie selon l'une des revendications précédentes, **caractérisée en ce que** le tuyau métallique (2) est fait d'acier inoxydable.
